# EUROPEAN PATENT APPLICATION

(11) **EP 2 184 203 A1**
(43) Date of publication of application: **12.05.2010**
(21) Application number: 08834761.2
(22) Date of filing: 29.09.2008
(51) Int. Cl.: B60N 2/42, A47C 7/34, A47C 7/38, A47C 7/46, B60R 21/04, B60R 21/055

(54) **SEAT STRUCTURE, SEAT HARDNESS CHANGE METHOD, AND VEHICLE**

(30) Priority: 01.10.2007 JP 2007257408
(71) Applicant: Toyota Jidosha Kabushiki Kaisha, Toyota-shi, Aichi-ken 471-8571 (JP); Aisin Seiki Kabushiki Kaisha, Aichi-ken 448-8650 (JP)
(72) Inventor: NAGATA, Toshiaki, Kariya-shi, Aichi 448-8650 (JP)
(74) Representative: Winter, Brandl, Fürniss, Hübner Röss, Kaiser, Polte Partnerschaft Patent- und Rechtsanwaltskanzlei
(86) International application number: PCT/JP2008/067654
(87) International publication number: WO 2009/044702

(57) **Abstract**

In a seat cushion of a seat, a first actuator supplies air via inside of a communication tube to inside of a air bag in a state where an air valve has been opened by control of a second actuator, whereby air pressure inside the air bag is adjusted, hardness of a pad and in turn the seat cushion is adjusted. Further, after the hardness of the seat cushion has been adjusted, the air valve is closed by control of the second actuator. For this reason, the hardness of the seat cushion can be adjusted at an appropriate hardness with respect to a vehicle occupant.

## Description

### TECHNICAL FIELD

The present invention relates to a seat structure where a pad is disposed inside a seat of a vehicle, a method of changing the seat hardness in the seat structure, and a vehicle in which the seat structure is disposed.

### BACKGROUND ART

There is a seat structure where an air bag is disposed inside a seat cushion and inside a seat back (e.g., see patent document 1).

However, in this seat structure, the shape of the seat cushion and the seat back is maintained as a result of the air bag being disposed across the entire seat and air being enclosed in the air bag, no consideration is given in relation to the pad hardness of the seat cushion and the seat back, and the pad hardness cannot be changed with respect to a seated person.
Patent Document 1: Japanese Patent Application Laid-Open (JP-A) No. 2000-41784

### DISCLOSURE OF THE INVENTION

### <Problem that the Invention is to Solve>

In consideration of the above-described circumstances, it is an object of the present invention to obtain a seat structure where the hardness of the seat can be changed with respect to a seated person, a method of changing seat hardness, and a vehicle.

### <Solution to the Problem>

A seat structure according to claim 1 comprises: a pad that is disposed inside a seat of a vehicle and has elasticity and air permeability; a housing bag that houses the pad and is configured to be capable of enclosing air inside; and air pressure varying means that is communicated with the inside of the housing bag and changes the hardness of the pad by varying the air pressure inside the housing bag.

In the seat structure according to claim 1, the pad that is disposed inside the seat of the vehicle has elasticity and air permeability.

Here, the housing bag that is configured to be capable of enclosing air inside houses the pad, and the air pressure varying means that is communicated with the inside of the housing bag changes the air pressure inside the housing bag. Therefore the air pressure inside the pad is changed and the hardness of the seat is capable of being varied. For this reason, there can be configured a seat structure where the seat hardness can be changed with respect to a seated person while controlling deformation of the outer shape of the seat.

A seat structure according to claim 2 comprises the seat structure according to claim 1, wherein: the pad and the housing bag are disposed in at least one of a seat cushion, a seat back or a headrest of the seat, and the air pressure varying means supplies air to the inside of the housing bag to raise the air pressure inside the housing bag at a time of a vehicle collision.

In the seat structure according to claim 2, the pad and the housing bag are disposed in at least one of the seat cushion, the seat back or the headrest of the seat. At the time of the vehicle collision, the air pressure varying means supplies air to the inside of the housing bag to raise the air pressure inside the housing bag. Thus, the hardness of at least one of the seat cushion, the seat back or the headrest is made higher, whereby sinking of the seated person into at least one of the seat cushion, the seat back or the headrest can be controlled.

A seat structure according to claim 3 comprises the seat structure according to claim 1 or claim 2, wherein the air pressure varying means comprises supply means that supplies air to the inside of the housing bag and outflow adjusting means that adjusts the outflow velocity of air from the inside of the housing bag to the outside.

In the seat structure according to claim 3, the supply means of the air pressure varying means supplies air to the inside of the housing bag.

Here, the outflow adjusting means of the air pressure varying means adjusts the outflow velocity of air from the inside of the housing bag to the outside. For this reason, with respect to a sudden load on the seat, outflow of air from the inside of the housing bag can be controlled and the hardness of the seat can be held.

A seat structure according to claim 4 comprises the seat structure according to any one of claim 1 to claim 3, wherein the housing bag and the pad are integrally formed.

In the seat structure according to claim 4, the housing bag and the pad are integrally formed. For this reason, the entry of air between the housing bag and the pad can be controlled and the seat hardness can effectively be made changeable with respect to the seated person.

A seat structure according to claim 5 comprises the seat structure according to any one of claim 1 to claim 4, wherein the housing bag configures a surface member that covers the entire pad and is disposed on the surface of the seat.

In the seat structure according to claim 5, the housing bag configures a surface member that covers the entire pad and is disposed on the surface of the seat. For this reason, the seat hardness can effectively be made changeable with respect to the seated person.

A method of changing seat hardness according to claim 6 is a method of changing seat hardness in a seat structure, the seat structure comprises a pad that is disposed inside a seat of a vehicle and has elasticity and air permeability, a housing bag that houses the pad and is configured to be capable of enclosing air inside, and air pressure varying means that is communicated with the inside of the housing bag, the method comprises using the air pressure varying means to change the hardness of the pad by varying the air pressure inside the housing bag.

A vehicle according to claim 11 is a vehicle comprising the seat structure according to any one of claim 1 to claim 5.

### BRIEF DESCRIPTION OF THE DRAWINGS

FIG. 1 is a cross-sectional view (a cross-sectional view along line 1-1 of FIG. 2) showing main portions of a seat pertaining to an embodiment of the present invention as seen from a vehicle front direction; and
FIG. 2 is a perspective view showing the seat pertaining to the embodiment of the present invention as seen diagonally from the vehicle left and front direction.

### BEST MODE FOR CARRYING OUT THE INVENTION

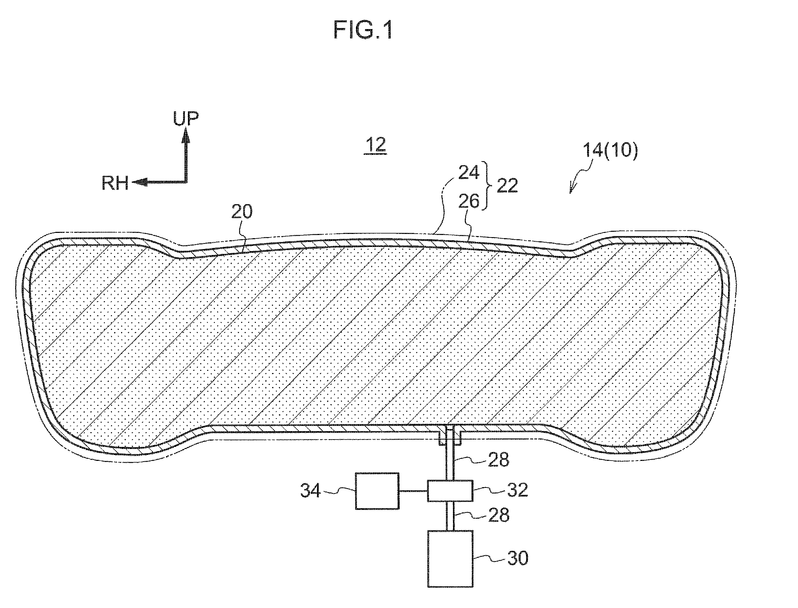

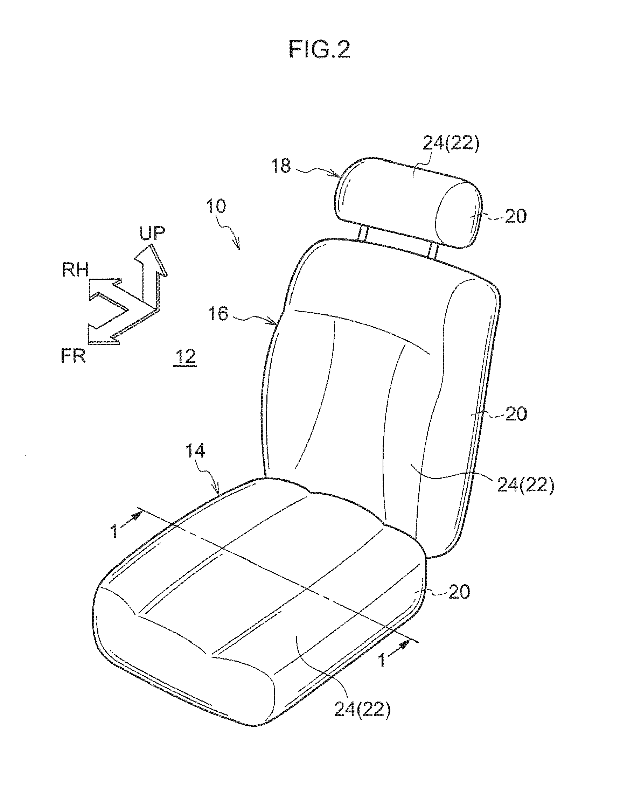

In FIG. 1, the main portions of a seat 10 pertaining to an embodiment configured as a result of a seat structure and a method of changing seat hardness of the present invention being applied thereto is shown in a cross-sectional view (a cross-sectional view along line 1-1 of FIG. 2) as seen from a vehicle front direction. In FIG. 2, the seat 10 is shown in a perspective view as seen diagonally from the vehicle left and front direction. It will be noted that, in the drawings, arrow FR represents a vehicle front direction, arrow RH represents a vehicle right direction, and arrow UP represents an up direction.

The seat 10 (e.g., a driver seat or a front passenger seat) in the present embodiment is disposed inside a vehicle cabin 12 of a vehicle, and the seat 10 is configured such that its front side faces the vehicle front side and such that an unillustrated vehicle occupant (e.g., a driver or a front passenger) serving as a seated person can sit in the seat 10.

The seat 10 has, in a lower portion thereof, a seat cushion 14 serving as a seat structure portion, and the seat cushion 14 is disposed substantially horizontally and is configured to be capable of supporting the vehicle occupant from below.

The seat 10 has, in an upper portion thereof, a seat back 16 serving as a seat structure portion, and the seat back 16 is disposed upright from the vehicle back side end of the seat cushion 14 and is configured to be capable of supporting the upper body of the vehicle occupant. The seat back 16 is supported such that it can be tilted with respect to the seat cushion 14, and tilting of the seat back 16 is locked.

The seat 10 has, on top of the seat back 16, a headrest 18 serving as a seat structure portion, and the headrest 18 is supported on the top end of the seat back 16. The headrest 18 projects upward from the seat back 16 and is configured to be capable of supporting the head of the vehicle occupant.

Pads (cushion pads) 20 are disposed inside the seat cushion 14, the seat back 16 and the headrest 18, and the pads 20 are configured in shapes corresponding to the outer shapes of the seat cushion 14, the seat back 16 and the headrest 18. The pads 20 are made of resin foam and have elasticity and air permeability, and the material of the pads 20 particularly in the seat cushion 14 and the headrest 18 is configured such that its hardness is low (soft).

The entireties of the pads 20 are covered with a surface member 22.

In the seat back 16, the surface member 22 is configured by only an outer layer 24, and the outer layer 24 has air permeability.

In the seat cushion 14 and in the headrest 18, the surface member 22 is configured by the outer layer 24 and by an air bag 26 serving as a housing bag, the air bag 26 houses the entire pad 20, and the outer layer 24 is attached to the outer periphery of the air bag 26. The air bag 26 does not have air permeability and is configured to be capable of enclosing air inside the air bag 26. The air bag 26 is adhered to and formed integrally with the pad 20, and the air bag 26 encloses the entire pad 20.

The inside of the air bag 26 is communicated, via the inside of a tubular communication tube 28 serving as communicating means, with a first actuator 30 serving as supply means that configures air pressure varying means, and the first actuator 30 is configured to be capable of supplying air to the inside of the air bag 26 via the inside of the communication tube 28 and is configured to be capable of raising the air pressure inside the air bag 26 (the quantity of air inside the air bag 26 and the air pressure inside the pad 20). In the communication tube 28, there is disposed an air valve 32 serving as opening/closing means that configures outflow adjusting means that configures the air pressure varying means, and the air valve 32 is configured to be capable of opening and closing the communication tube 28 as a result of being configured to be openable and closeable. A second actuator 34 serving as control means that configures the outflow adjusting means that configures the air pressure varying means is connected to the air valve 32, and the second actuator 34 is configured to be capable of controlling the opening degree and closing of the air valve 32.

An elongate band-like seat belt (not shown) is configured to be capable of being worn by the vehicle occupant seated in the seat 10. The seat belt is supported on the vehicle width direction outer side of the top end of the seat 10, the vehicle width direction inner side of the bottom end of the seat 10 and the vehicle width direction outer side of the bottom end of the seat 10, and the seat belt has a shoulder belt portion from the vehicle width direction outer side of the top end of the seat 10 to the vehicle width direction inner side of the bottom end of the seat 10 and a lap belt portion from the vehicle width direction inner side of the bottom end of the seat 10 to the vehicle width direction outer side of the bottom end of the seat 10. The shoulder belt portion is worn from the vehicle front side diagonally from the vehicle width direction outer side shoulder of the vehicle occupant to the vehicle width direction inner side of the abdomen, the lap belt portion is worn from the vehicle front side in the vehicle width direction across the abdomen of the vehicle occupant, and at a time of a vehicle emergency (particularly at a time of a vehicle collision), movement in the longitudinal direction of the seat belt is restricted so that the seat belt is capable of restraining the vehicle occupant.

Next, the operation of the present embodiment will be described.

In the seat 10 of the configuration described above, the shoulder belt portion of the seat belt is worn from the vehicle front side diagonally from the vehicle width direction outer side shoulder of the vehicle occupant to the vehicle width direction inner side of the abdomen, the lap belt portion of the seat belt is worn from the vehicle front side in the vehicle width direction across the abdomen of the vehicle occupant, and at the time of the vehicle emergency, the seat belt is capable of restraining the vehicle occupant.

Here, in the seat cushion 14 and in the headrest 18, the first actuator 30 supplies air via the inside of the communication tube 28 to the inside of the air bag 26 in a state where the air valve 32 has been opened by the control of the second actuator 34, whereby the air pressure inside the air bag 26 is adjusted (changed), the hardness of each of the seat cushion 14 and the headrest 18 is adjusted with respect to the vehicle occupant while the entry of air between the pad 20 and the air bag 26 is controlled and deformation of the outer shapes of the seat cushion 14 and the headrest 18 is controlled. That is, when air is supplied to the inside of the air bag 26, the air pressure inside the air bag 26 becomes higher and the pad 20 also hardens. For this reason, the internal pressure of the pad 20 is adjusted and the hardness of the pad 20 is adjusted as a result of the quantity of air supplied to the inside of the air bag 26 being adjusted. Further, after the hardness of each of the seat cushion 14 and the headrest 18 has been adjusted, the air valve 32 is closed by the control of the second actuator 34 and the hardness of each of the seat cushion 14 and the headrest 18 is maintained. For this reason, even when the pads 20 of the material whose hardness is low (soft) are used in the seat cushion 14 and the headrest 18, the hardness of each of the seat cushion 14 and the headrest 18 can be held at an appropriate hardness.

Further, in the seat cushion 14 and in the headrest 18, the outflow velocity at which air inside the air bag 26 flows out to the outside via the inside of the communication tube 28 and the first actuator 30 is adjusted as a result of the opening degree of the air valve 32 being adjusted by the control of the second actuator 34.

For this reason, for example, when the opening degree of the air valve 32 has been made low by the control of the second actuator 34 such that the outflow velocity of air inside the air bag 26 has been made low (the air valve 32 may also be closed so that air inside the air bag 26 does not flow out), the outflow of air from the inside of the air bag 26 can be controlled or prevented with respect to a sudden load on the seat cushion 14 and the headrest 18 from the vehicle occupant at a time when the vehicle is traveling, the hardness of each of the seat cushion 14 and the headrest 18 can be ensured, and the posture of the vehicle occupant can be held.

Moreover, when the air valve 32 has been opened by the control of the second actuator 34, air can flow out from the inside of the air bag 26 with respect to a gradual load on the seat cushion 14 and the headrest 18 from the vehicle occupant at a time when the vehicle is traveling. For this reason, the inherent property of the pads 20 whose hardness is low can be exhibited.

Further, at a time of a vehicle frontal collision which is the vehicle emergency (a time when the vehicle frontal collision has been predicted is preferred), in the seat cushion 14, the air pressure inside the air bag 26 is suddenly made high as a result of the air valve 32 being opened by the control of the second actuator 34 and the first actuator 30 suddenly supplying air to the inside of the air bag 26 via the inside of the communication tube 28. Moreover, immediately after the air pressure inside the air bag 26 has suddenly been made high, the air valve 32 is closed by the control of the second actuator 34. Thus, the hardness of the seat cushion 14 is made high, whereby sinking of the vehicle occupant into the seat cushion 14 can be controlled, and the lap belt portion of the seat belt can excellently restrain movement of the abdomen of the vehicle occupant toward the vehicle front side.

Moreover, at a time of a vehicle rear collision which is the vehicle emergency (a time when the vehicle rear collision has been predicted is preferred), in the headrest 18, the air pressure inside the air bag 26 is suddenly made high as a result of the air valve 32 being opened by the control of the second actuator 34 and the first actuator 30 suddenly supplying air to the inside of the air bag 26 via the inside of the communication tube 28. Moreover, immediately after the air pressure inside the air bag 26 has suddenly been made high, the air valve 32 is closed by the control of the second actuator 34. Thus, the hardness of the headrest 18 is made high, whereby sinking of the head of the vehicle occupant into the headrest 18 can be controlled, and the headrest 18 can excellently restrain movement of the head of the vehicle occupant toward the vehicle rear side.

Further, in the seat cushion 14 and in the headrest 18, the air bag 26 covers the entire pad 20. For this reason, the hardness of each of the seat cushion 14 and the headrest 18 can be effectively adjusted and held, and the hardness of each of the seat cushion 14 and the headrest 18 can be respectively equalized.

Moreover, the air bag 26 that houses the pad 20 in an enclosed state configures the surface member 22 that is disposed on the surface of each of the seat cushion 14 and the headrest 18. For this reason, the creation of the seat cushion 14 and the headrest 18 can be made easy.

It will be noted that, in the present embodiment, the surface member 22 of each of the seat cushion 14 and the headrest 18 was configured by the outer layer 24 and the air bag 26, but the surface member 22 of each of the seat cushion 14 and the headrest 18 may also be configured by just the air bag 26.

Further, in the present embodiment, the seat 10 was given a configuration disposed with the air valve 32 and the second actuator 34, but the seat 10 may also be given a configuration where the air valve 32 and the second actuator 34 are omitted. In this case, the hardness of each of the seat cushion 14 and the headrest 18 can be maintained as a result of the first actuator 30 continuously supplying, to the inside of the air bag 26, a quantity (supply velocity) of air that exceeds the quantity (discharge velocity) of air that is discharged from the air bag 26 (air discharge hole).

Moreover, in the present embodiment, the seat 10 was given a configuration where the first actuator 30 supplies air to the inside of the air bag 26 particularly at the time of the vehicle collision, but the seat 10 is not invariably limited to this and may also be configured such that the first actuator 30 supplies air to the inside of the air bag 26 on the basis, for example, of an operation or the like by the vehicle occupant to adjust the hardness of the seat cushion 14 and the headrest 18. That is, the operation condition of the first actuator 30 is not limited to the time of the vehicle collision.

Further, in the present embodiment, the seat 10 was given a configuration where the air bag 26 was disposed in the seat cushion 14 and in the headrest 18, the air pressure inside the air bag 26 was made adjustable and the outflow velocity of air from the inside of the air bag 26 was made adjustable, but the seat 10 may also be given a configuration where the air bag 26 is disposed in the seat back 16, the air pressure inside the air bag 26 is made adjustable and the outflow velocity of air from the inside of the air bag 26 is made adjustable.

### EXPLANATION OF THE REFERENCE NUMERALS

- 10: Seat (Seat Structure)
- 14: Seat Cushion
- 16: Seat Back
- 18: Headrest
- 20: Pad
- 22: Surface Member
- 26: Air Bag (Housing Bag)
- 30: First Actuator (Air Pressure Varying Means, Supply Means)
- 32: Air Valve (Air Pressure Varying Means, Outflow Adjusting Means)
- 34: Second Actuator (Air Pressure Varying Means, Outflow Adjusting Means)

## Claims

1. A seat structure comprising:
a pad that is disposed inside a seat of a vehicle and has elasticity and air permeability;
a housing bag that houses the pad and is configured to be capable of enclosing air inside; and
air pressure varying means that is communicated with the inside of the housing bag and changes the hardness of the pad by varying the air pressure inside the housing bag.

2. The seat structure according to claim 1, wherein:
the pad and the housing bag are disposed in at least one of a seat cushion, a seat back or a headrest of the seat, and
the air pressure varying means supplies air to the inside of the housing bag to raise the air pressure inside the housing bag at a time of a vehicle collision.

3. The seat structure according to claim 1 or claim 2, wherein the air pressure varying means comprises supply means that supplies air to the inside of the housing bag and outflow adjusting means that adjusts the outflow velocity of air from the inside of the housing bag to the outside.

4. The seat structure according to any one of claim 1 to claim 3, wherein the housing bag and the pad are integrally formed.

5. The seat structure according to any one of claim 1 to claim 4, wherein the housing bag configures a surface member that covers the entire pad and is disposed on the surface of the seat.

6. A method of changing seat hardness in a seat structure, the seat structure comprising a pad that is disposed inside a seat of a vehicle and has elasticity and air permeability, a housing bag that houses the pad and is configured to be capable of enclosing air inside, and air pressure varying means that is communicated with the inside of the housing bag, the method comprising using the air pressure varying means to change the hardness of the pad by varying the air pressure inside the housing bag.

7. The method of changing seat hardness according to claim 6, wherein:
the pad and the housing bag are disposed in at least one of a seat cushion, a seat back and a headrest of the seat, the method further comprising:
using the air pressure varying means to supply air to the inside of the housing bag to raise the air pressure inside the housing bag at a time of a vehicle collision.

8. The method of changing seat hardness according to claim 6 or claim 7, wherein, in the air pressure varying means, supply means supplies air to the inside of the housing bag and outflow adjusting means adjusts the outflow velocity of air from the inside of the housing bag to the outside.

9. The method of changing seat hardness according to any one of claim 6 to claim 8, wherein the housing bag and the pad are integrally formed.

10. The method of changing seat hardness according to any one of claim 6 to claim 9, wherein the housing bag configures a surface member that covers the entire pad and is disposed on the surface of the seat.

11. A vehicle comprising the seat structure according to any one of claim 1 to claim 5.
